# EUROPEAN PATENT APPLICATION

(11) **EP 3 904 119 A1**
(43) Date of publication of application: **03.11.2021**
(21) Application number: 20171640.4
(22) Date of filing: 27.04.2020
(51) Int. Cl.: B60C 11/03, B60C 11/13, B60C 11/12

(54) **TYRE**

(71) Applicant: Bridgestone Europe NV/SA, 1932 Zaventem (BE)
(72) Inventor: Maeda, Shimpei, 00128 Roma (IT); Ogura, Kenta, Tokyo, 104-8340 (JP)
(74) Representative: Marchetti, Alessio

(57) **Abstract**

A tyre comprises a tread with a groove 11 having a fence 12 in it. Two wedges 13, 14 are provided in the groove 11, each on a first side of the fence 12 in the groove longitudinal direction. Each wedge 13, 14 is arranged to allow the fence 12 to be deformed by a flow of water flowing along the groove from the first side. This allows the water to flow past the fence 12 and drain out of the groove 11. However, the wedges 13, 14 are arranged to limit the deformation of the fence 12 by a flow of snow flowing along the groove from a second side, which is opposite to the first side, during braking. This means that the fence 12 catches the snow, which improves grip by the tyre in the snow.

## Description

The present invention relates to tyres.

Pipe resonance in tyre circumferential grooves is one of the main causes of tyre pass-by noise. It is known to provide fences in tyre circumferential grooves to reduce pipe resonance. However, the fences act as an obstacle to drainage and make wet performance worse. Some fences are provided with voids or slits to allow water to drain, but this is not enough under some conditions.

The present invention aims to mitigate at least one of the problems of the prior art.

The present invention provides a tyre comprising: a tread with a groove having a fence in it; and a stopping device in the groove on a first side of the fence in the groove longitudinal direction; wherein the fence is deformable by a flow of water flowing along the groove from the first side, to allow the water to flow past the fence; and wherein the stopping device is arranged to limit the deformation of the fence by a flow of snow flowing along the groove from a second side which is opposite to the first side during braking or cornering enough to prevent the snow flowing past the fence.

The fence is able to be deformed by the flow of water flowing along the groove from the first side. The stopping device is arranged so that it does not prevent this. This deformation increases the flow area and allows the water to flow past the fence and drain from the groove. However, the stopping device is arranged to limit the deformation of the fence by the flow of snow flowing along the groove from the second side during braking or cornering so that the snow is prevented from flowing past the fence. This allows the fence to catch the snow, which improves grip by the tyre in the snow.

The stopping device may be arranged to limit the deformation of the fence by the flow of snow enough to prevent the fence being moved past the stopping device. Since the fence is not moved past the stopping device, the fence can catch the flow of snow during braking or cornering.

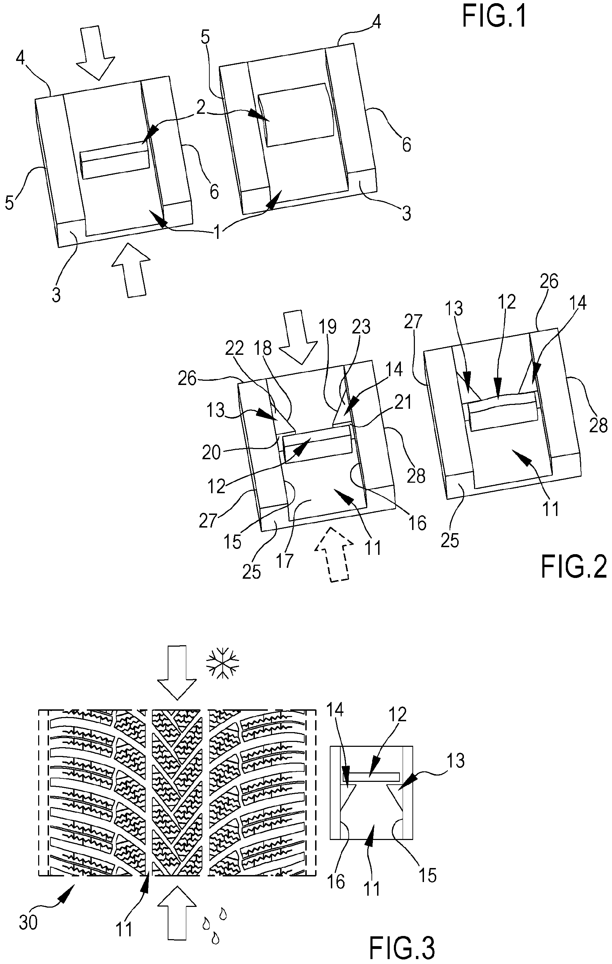

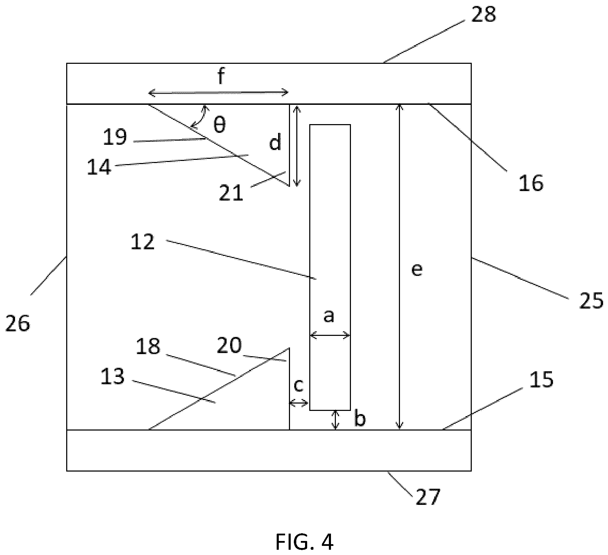

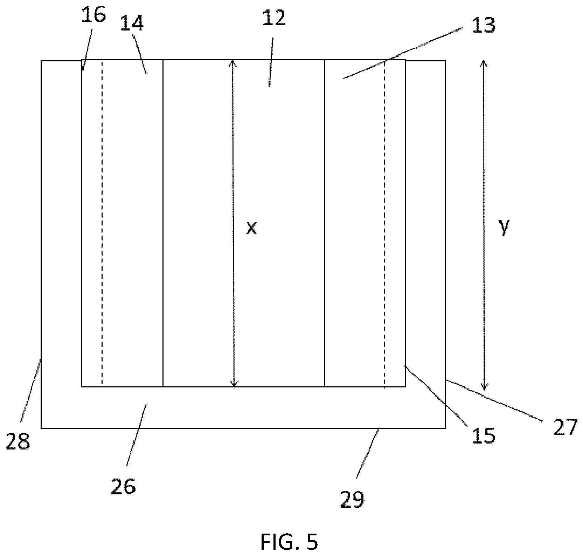

In the prior art of WO2017209159A1, Figs. 1 to 7 show various embodiments with fences provided in a groove. However, none of the fences in the groove can act as the stopping device of the present invention. For example, in the embodiment shown in Figs. 4 and 5, say a flow of snow is flowing along the groove from the right-hand side in Fig. 4 during braking or cornering. In that case, the fences 242 on the side walls would not be able to limit the deformation of the fence 241 on the groove bottom wall enough to prevent the snow flowing past the fence 241. The fences 242 are not robust enough to achieve this.

The fence may be attached to a wall of the groove, and the stopping device may be attached to a wall of the groove. That is, the stopping device may be attached to the same wall as the fence, or a different wall from the fence.

Preferably, the fence is not attached to one or both side walls of the groove. Preferably, the fence is only attached to the bottom wall of the groove. This allows the fence to deform and flex easily.

Preferably, the fence extends from the bottom wall of the groove. Preferably, the fence has an end surface in the groove longitudinal direction which is substantially parallel with the groove width direction. Preferably, the fence has two such end surfaces.

Preferably, the length of the stopping device in the groove longitudinal direction is at least 1.5 times the thickness of the fence in the groove longitudinal direction. A longer stopping device is more resistant to deformation by the force exerted by the snow. The relationship may be at least: 3, 4, 5, 9 or 12 times.

The relationship may be at most 16 times because very long stopping devices can start to introduce impact noise.

Preferably, the length of the stopping device in the groove longitudinal direction is at least 3 times the thickness of the fence in the groove longitudinal direction. A longer stopping device is typically more resistant to deformation by the force exerted by the snow.

The thickness of the fence in the groove longitudinal direction may be at least 0.4mm, and may be at most 1mm. Preferably, the thickness of the fence is 1 mm. If the fence is thicker than 1mm, it starts to become difficult to deform.

Preferably, the length of the stopping device in the groove longitudinal direction is greater than the width of the stopping device in the groove width direction. A longer stopping device is typically more resistant to deformation by the force exerted by the snow. A stopping device with a smaller width may impede the flow of water less. For example, when the inclined surface has an angle of greater than 45°, the flow of water is not smooth, whereas an angle of less than 45°gives a smoother flow of water.

Preferably, the length of the stopping device in the groove longitudinal direction is at least 1.5 times the width of the stopping device in the groove width direction. The relationship may be at least: 2, 3, 4, 5, or 6 times.

The gap between the stopping device and the fence in the groove longitudinal direction may be at least 0.2mm, and may be at most 0.8mm. Preferably, the gap is 0.2mm. The gap should be as small as possible so that the fence deforms as little as possible before it contacts the stopping device.

The gap between the fence and a groove side wall may be at least 0.2mm, and may be at most 0.8mm. By having the gap from the wall at least 0.2mm, the fence can deform easily. By having the gap at most 0.8mm, the fence can catch snow effectively. Preferably, the gap is 0.2mm.

Preferably, the stopping device is adjacent to a side wall of the groove. Being adjacent to a side wall can reduce the drag of the stopping device on the flow of water, in comparison to the stopping device being in the middle of the groove. In addition, the stopping device can be more robust.

Preferably, the stopping device is attached to a side wall of the groove. The stopping device may also, or instead, be attached to the bottom wall of the groove.

Preferably, the length of the stopping device in the groove longitudinal direction is at least 0.1 times the width of the groove. A longer stopping device is more resistant to deformation by the force exerted by the snow. The relationship may be at least: 0.3, 0.4, 0.5 or 0.7 times.

The relationship may be at most 0.9 times because very long stopping devices can start to introduce impact noise.

Preferably, when viewed in a groove longitudinal direction, the stopping device overlaps the fence by at least 30% of the area of the fence. With a larger area of overlap, the stopping device is better able to support the fence against the force exerted by the snow. The relationship may be at least: 35%, 40%, 45%, or 50%.

The relationship may be at most 60% because very large areas of overlap can impede the flow of water.

Preferably, the stopping device overlaps the fence from the fixed end of the fence to the free end of the fence.

Preferably, when viewed in a groove longitudinal direction, the stopping device overlaps the fence by at least 0.8mm, and may overlap by at most 1.5mm. By making overlap within this range, the stopping device overlaps enough to support the fence against deformation by the snow, without excessively impeding water flow.

Preferably, the length of the stopping device in the groove longitudinal direction is at least 1.7mm. A longer stopping device is more resistant to deformation by the force exerted by the snow. The length may be at least: 2.5mm, 3mm, 4mm, or 5.2mm. The length may be at most 6.3mm because very long stopping devices can start to introduce impact noise.

Preferably, the stopping device is adjacent to a wall of the groove, and has an inclined surface to guide the flow of water flowing from the first side away from the wall to which the stopping device is adjacent and onto the fence.

The inclined surface smoothly narrows the groove and reduces the flow area of the water. This, from Bernoulli's principle, increases the velocity of flow and the dynamic pressure. The increased dynamic pressure helps to deform the fence more readily, and therefore the water can flow more easily along the groove. Accordingly, water drainage can be improved.

Preferably, the stopping device has an inclined surface to guide the flow of water flowing from the first side away from the wall to which the stopping device is attached and onto the fence. Preferably, the stopping device is adjacent to, or attached to, a side wall of the groove.

Preferably, the inclined surface has an angle of at least 20°, and preferably at most 30°, from the wall to which the stopping device is adjacent. This provides a good trade-off between support for the fence and not impeding the flow of water excessively.

Preferably, the inclined surface extends from the longitudinal end of the stopping device which is further from the fence.

Preferably, the inclined surface extends to the longitudinal end of the stopping device which is nearer to the fence.

The stopping device may have an end surface in the groove longitudinal direction which is substantially parallel with the groove width direction, preferably the end surface which is nearer the fence.

Preferably, the height of the fence is at least 85% of the depth of the groove, more preferably 100%. This allows the fence to catch snow effectively.

Preferably, the width of the groove is more than 3 times the width of the stopping device in the groove width direction. This is because very wide stopping devices can impede the flow of water.

Preferably, the width of the groove is less than 12 times the width of the stopping device in the groove width direction. If the groove is wider than this in comparison to the stopping device, the stopping device may not be able to support the fence against deformation.

The width of the stopping device in the groove width direction may be at least 1mm and may be at most 2.3mm. For example, the width of the stopping device may be 2mm.

The width of the groove may be at least 4mm and may be at most 12mm. For example, the width of the groove may be 8mm.

The width of the fence in the groove width direction is at least 2.4mm, and may be at most 11.6mm. For example, the width of the fence in the groove width direction may be 7mm.

Preferably, a plurality of the stopping devices are provided, one of which is adjacent to one wall of the groove, and another of which is adjacent to another wall of the groove, each of which is arranged as defined above according to the present invention. In addition, each stopping device may be arranged as defined above with regard to the optional features of the present invention.

Having at least two stopping devices provides a convenient means of supporting the fence to limit its deformation by the snow. Preferably, one stopping device is adjacent to one side wall of the groove, and another stopping device is adjacent to another (opposing) side wall of the groove.

The stopping device may have a limiting surface for limiting the deformation of the fence. Preferably, the limiting surface is arranged to limit the deformation of the fence by contacting the fence. The limiting surface may be substantially planar and normal to the groove longitudinal direction.

The stopping device may be substantially triangular in plan.

Preferably, in the tyre of the present invention, the tyre has a designated rotation direction; the groove having a fence in it is a circumferential groove; and the stopping device is arranged to limit the deformation of the fence by a flow of snow flowing along the groove from a second side which is opposite to the first side during braking enough to prevent the snow flowing past the fence. In this specification, "circumferential groove" includes a groove which runs in the circumferential direction but which is not exactly parallel with the tyre circumferential direction.

Alternatively, the groove may be a lateral groove. For example, when the fence is in a lateral groove, the stopping device may be arranged between the fence and the tyre equatorial plane. As the normal flow direction of water is from the tyre equatorial plane towards the tread edge, the stopping device allows the fence to deform which allows the water to flow towards the tread edge. However, the stopping device prevents snow flowing in the opposite direction, which improves grip during cornering.

When the groove is a lateral groove but has a circumferential component, the tyre may have a designated rotation direction, and the stopping device may be arranged to limit the deformation of the fence by a flow of snow flowing along the groove from a second side which is opposite to the first side during braking enough to prevent the snow flowing past the fence.

Preferably, the tyre is a snow tyre or an all-season tyre.

An embodiment of the present invention will now be described, purely by way of example, with reference to the drawings in which:
Fig. 1 is an isometric view from above of a conventional tyre groove with a fence in it;
Fig. 2 is an isometric view from above of a tyre groove with a fence in it according to an embodiment of the present invention;
Fig. 3 is a plan view of a tyre tread and the tyre groove with a fence in it according to the embodiment of the present invention;
Fig. 4 is a plan view of the tyre groove with a fence in it of Fig. 2;
Fig. 5 is an elevation view of the tyre groove with a fence in it of Fig. 2;
Fig. 6 is a graph showing the results of computer simulations carried out to confirm the effects of the present invention; and
Fig. 7 is another graph showing the results of the simulations.

Referring to Fig. 1, a groove 1 with a fence 2 in it of a conventional tyre is shown. The fence 2 is provided in a circumferential groove 1 in the tyre tread in order to reduce the noise caused by pipe resonance in the groove 1. The left-hand drawing shows the fence in its non-deformed state, and the right-hand drawing shows the fence in its deformed state. In Fig. 1 only a section of the groove 1 of the tyre is shown. Because of this, groove section end surfaces 3 and 4 and groove section side surfaces 5 and 6 are shown, but these would not exist in the real tyre.

In Figs. 1 and 2, the solid arrows indicate that the fence is deformable under a flow of water or snow from that direction, and the dashed arrow indicates that the fence is not deformable under a flow from that direction. Accordingly, in the Fig. 1, the fence is deformable in both directions, whereas in Fig. 2, the fence is only deformable under a flow from the top of the drawing to the bottom. Here, "deformable" means the fence can deform sufficiently to allow the flow to pass. In Fig. 1, the fence is free to deform under a flow of water or snow from either direction.

Fig. 2 shows a groove 11 with a fence 12 in it of a tyre according to an embodiment of the present invention. The groove 11 is in the tyre tread. The groove 11 and the fence 12 are similar to the groove 1 and the fence 2 of the conventional tyre of Fig. 1. However, two stopping devices 13, 14 in the form of two wedges 13, 14 are provided in the groove 11, each on a first side of the fence 12 in the groove longitudinal direction. The first side is the upper side in Fig. 2. Each wedge 13, 14 is arranged to allow the fence 12 to be deformed by a flow of water flowing along the groove from the first (upper) side. The deformation of the fence 12 allows the water to flow past the fence 12.

In Fig. 2, similarly to Fig. 1, only a section of the groove 11 of the tyre is shown. Because of this, groove section end surfaces 25 and 26 and groove section side surfaces 27 and 28 are shown, but these would not exist in the real tyre.

In the present embodiment, the groove 11 is a circumferential groove running parallel to the tyre circumferential direction. However, the groove need not run exactly parallel with the tyre circumferential direction.

The wedges 13, 14 are arranged to limit the deformation of the fence 12 by a flow of snow flowing along the groove from a second (lower) side which is opposite to the first (upper) side during braking of the tyre. The wedges 13, 14 limit the deformation enough to prevent the snow flowing past the fence 12. Therefore, the fence 12 catches the snow, which improves grip by the tyre in the snow. Since the groove 11 is a circumferential groove in the present embodiment, during braking the snow flows in a circumferential direction. The water also flows in a circumferential direction but mainly in an opposite direction from the snow.

The groove 11 has groove side walls 15, 16 and a groove bottom wall 17. In Fig. 2, the side walls 15, 16 are each planar and they are parallel to each other. However, this is not essential. The groove bottom wall 17 extends between the side walls 15, 16 at a right angle to the side walls 15, 16, but again this is not essential.

In another embodiment, the groove 11 is a lateral groove. In that embodiment, the groove 11 runs parallel to the tyre width direction. However, the groove need not run exactly parallel with the tyre width direction.

In the present embodiment, the fence 12 is attached to the groove bottom wall 17 and extends upwardly from the groove bottom wall 17, in a tyre radially outward direction.

In the present embodiment, the fence 12 has a constant thickness in the groove longitudinal direction and a constant width in the groove width direction as it extends upwardly. The fence 12 is attached to the groove bottom wall 17 along a line which is perpendicular to the groove side walls 15, 16. The fence is substantially rectangular in plan. However, in other embodiments, the fence may have a different shape.

In the present embodiment, the thickness of the fence 12 in the groove longitudinal direction is much smaller than its width in the groove width direction. This allows it to deform and flex easily when it is hit by a flow from the first or second side.

The fence 12 forms a cantilever which bends about its line of attachment to the groove bottom wall 17.

In the present embodiment, the wedge 13 is attached to one side wall 15, and the other wedge 14 is attached to the other side wall 16. The wedge 13 extends from side wall 15 towards the centre of the groove 11. The wedge 14 extends from side wall 16 towards the centre of the groove 11. The length of each wedge 13, 14 in the groove longitudinal direction gradually decreases from the point that the wedge 13, 14 is attached to the groove side wall 15, 16 to the point where the wedge 13, 14 is nearest to the centre of the groove.

In addition, in this embodiment, both wedges 13, 14 are attached to the groove bottom wall 17, which makes them robust.

The wedge 13 has an inclined surface 18, which is inclined with respect to the side wall 15. The inclined surface 18 is planar. A direction normal to the inclined surface 18 is parallel to the groove bottom wall 17.

The inclined surface 18 extends from the side wall 15, at the longitudinal end of the wedge 13 which is further from the fence 12, towards the centre of the groove to the longitudinal end of the wedge 13 which is nearer to the fence 12. Therefore, the inclined surface 18 guides a flow of water flowing from the first side away from the side wall 15, and onto the fence 12. The inclined surface smoothly narrows the groove 11 and reduces the flow area of the water. This, from Bernoulli's principle, in turn increases the velocity of flow and the dynamic pressure. The increased dynamic pressure helps to deform the fence 12 more readily. Therefore, the water can flow more easily along the groove 11, and water drainage can be improved.

In the present embodiment, a planar inclined surface 18 is provided. However, a curved surface may be provided instead, as long as it guides the flow of water flowing from the first side away from the side wall 15, and onto the fence 12.

The wedge 13 has limiting surface in the form of an end surface 20 for limiting the deformation of the fence 12. The end surface 20 is planar, and is normal to the groove longitudinal direction and to the side wall 15. In addition, a direction normal to the end surface 20 is parallel to the groove bottom wall 17.

The end surface 20 extends from the side wall 15 towards the centre of the groove 11. The end of the inclined surface 18 which is nearer to the fence 12 meets the end of the end surface 20 which is nearer to the centre of the groove 11.

In this way, the wedge 13 is substantially triangular in plan.

The wedge 13 also has a top surface 22 which is parallel with the groove bottom wall 17.

The wedges 13 and 14 are symmetrical about the centre of the groove 11, and the wedge 14 has the following features which correspond to those of the wedge 13: inclined surface 19; end surface 21; and top surface 23.

Referring to the right-hand drawing in Fig. 2, in comparison to the left-hand drawing, the fence 12 has been pushed and deformed slightly towards the wedges 13, 14 under the action of a flow of snow flowing along the groove 11 in the direction from the bottom of the drawing to the top. However, the wedges 13, 14 limit the deformation of the fence 12 and prevent it from large deformation by a flow of snow flowing along the groove from a second (lower) side which is opposite to the first (upper) side during braking of the tyre. Since the fence 12 can only deform a small amount, and not so much that the fence 12 passes the wedges 13, 14, the snow is prevented from flowing past the fence 12.

Referring to Fig. 3, the left-hand drawing is of a tyre tread 30, and the right-hand drawing is of the groove 11 of Fig. 2. The groove 11 is shown in the tyre tread 30 in the left-hand drawing, but the fence 12 and wedges 13, 14 are not shown.

In the left-hand drawing of Fig. 3, the bottom arrow indicates the predominant flow direction of water in the groove longitudinal direction when the tyre is running. Specifically, during wet running, the flow of water in the portion of the tyre in front of the contact patch is in the forward direction (in the direction of travel of the tyre). In the portion in the contact patch, there is very little if any flow in the groove longitudinal direction.

The top arrow in the left-hand drawing indicates the flow direction of snow during braking. During braking in snowy conditions, the flow of snow is in the opposite direction to the predominant flow direction of water. That is, the snow flows in the backward direction (against the direction of travel of the tyre).

In the right-hand drawing, the gaps between each wedge 13 ,14 and the fence 12 can be seen, as well as the gap between each end of the fence 12 and the side walls 15, 16 of the groove 11.

In the present embodiment, the fence 12 and wedges 13, 14 are made from the same material or compound as the tyre tread 30. Alternatively, the fence 12 and wedges 13, 14 may be made from a different material or compound. As far as the fence 12 is concerned, the material or compound must be soft or flexible enough to deform under a flow of water, but hard or stiff enough to achieve the required snow performance (i.e. catch the snow). The material or compound of the wedges 13, 14 must be hard or stiff enough to limit the deformation of the fence 12 to achieve the required snow performance.

From a noise reduction point of view, it is preferable to have at least 1 fence (and its stopping device or devices) per contact patch. An example length of contact patch is 150mm of tyre circumference. That is, 150mm of the circumference is in contact with the road surface. For e.g. a tyre of 2000mm circumferential length, it may be preferable to have at least: 13, 20, or 28 fences per groove.

To confirm the effects of the present invention, some computer simulations were carried out. Figs. 4 and 5 are used to illustrate the dimensions and relative dimensions of the parts used in the simulations.

The parts labelled "a" to "f" and "θ" in Fig. 4 had the following dimensions in the simulations:
a: 1mm
b: 0.5mm
c: 0.5mm
d: 2mm
e: 8mm
f: 3.5mm
θ: 30°

In Fig. 5 "x" denotes the height of the fence 12, and "y" denotes the depth of the groove. The ratio of x/y had the following value in the simulations:
x/y: 1

In Fig. 5, groove section bottom surface 29 is shown, which would not exist in the real tyre.

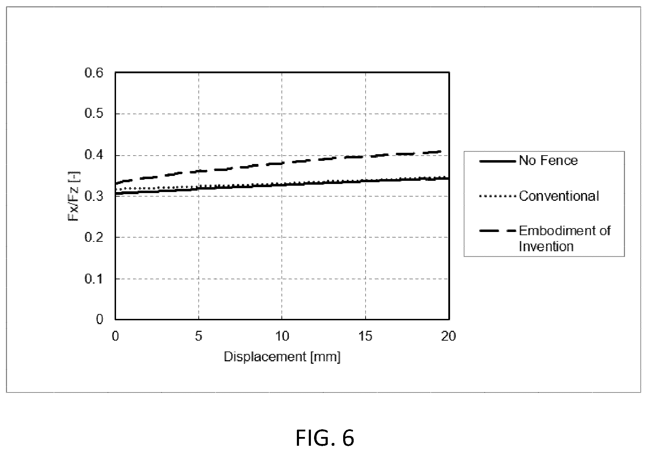

Fig. 6 is a graph showing the results of the simulations. The vertical axis shows "Fx/Fz [-]". Here, Fx is longitudinal force [N] and Fz is vertical load [N]. Fx/Fz is analogous to friction coefficient. The horizontal axis shows "Displacement [mm]". This means the sliding distance of the tyre during braking.

The solid line denotes the simulation with the groove but no fence ("No Fence"), the dotted line denotes the simulation with the groove and a fence with no stopping device as shown in Fig. 1 ("Conventional"), and the dashed line denotes the simulation with a fence and stopping devices according the embodiment of the present invention shown in Fig. 2 ("Embodiment of Invention").

It can be seen from the graph that Fx/Fy for the curve of "Embodiment of Invention" is larger than Fx/Fy for the other curves for all displacements. This is because snow is trapped on the fence during braking. For example, it can be seen that at a displacement of 20mm, Fx/Fy for "Embodiment of Invention" is about 0.41, in comparison to about 0.35 for "No Fence" and "Conventional".

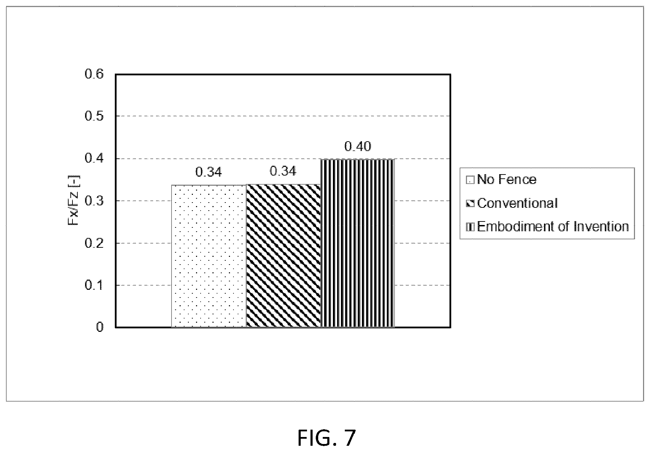

Fig. 7 is a graph showing the results of the simulations. Again, the vertical axis shows "Fx/Fz [-]" where Fx is longitudinal force [N] and Fz is vertical load [N]. Fx/Fz is analogous to friction coefficient. The three bars each shows the results for "No Fence", "Conventional" and "Embodiment of Invention". However, in contrast to Fig. 6, in Fig. 7 the bars show values for the mean of Fx/Fz from a displacement of 10mm to 20mm. For the "No Fence" and "Conventional", the mean is 0.34, whereas for "Embodiment of Invention", the mean is 0.40. The value of 0.40 corresponds to an increase of 18% in the mean Fx/Fz in comparison to "No Fence" and "Conventional". Hence it can be considered that the mean coefficient of friction is 18% higher in the "Embodiment of Invention" and greater grip on snow is possible.

Although an embodiment of the invention has been described, various changes are possible. For example, in the embodiment, the inclined surface 18 meets the end surface 20. However, in another embodiment, there could be a side surface parallel with the groove longitudinal direction between the inclined surface 18 and the end surface 20. This side surface could provide more resistance to deformation from the flow of snow acting on the fence 12, while still allowing the inclined surface 18 to guide the flow of water away from the side wall of the groove 11.

An embodiment of the present invention has been described above by way of example. However, the present invention is not necessarily limited to the features of the embodiment described, and various modifications, additions and/or omissions will present themselves to one skilled in the art, all of which form part of the invention, together with their equivalents.

## Claims

1. A tyre comprising:
a tread with a groove having a fence in it; and
a stopping device in the groove on a first side of the fence in the groove longitudinal direction;
wherein the fence is deformable by a flow of water flowing along the groove from the first side, to allow the water to flow past the fence; and
wherein the stopping device is arranged to limit the deformation of the fence by a flow of snow flowing along the groove from a second side which is opposite to the first side during braking or cornering enough to prevent the snow flowing past the fence.

2. A tyre according to claim 1, wherein the length of the stopping device in the groove longitudinal direction is at least 1.5 times the thickness of the fence in the groove longitudinal direction.

3. A tyre according to claim 1 or 2, wherein the length of the stopping device in the groove longitudinal direction is at least 3 times the thickness of the fence in the groove longitudinal direction.

4. A tyre according to any preceding claim, wherein the length of the stopping device in the groove longitudinal direction is greater than the width of the stopping device in the groove width direction.

5. A tyre according to any preceding claim, wherein the stopping device is adjacent to a side wall of the groove.

6. A tyre according to any preceding claim, wherein the stopping device is attached to a side wall of the groove.

7. A tyre according to any preceding claim, wherein the length of the stopping device in the groove longitudinal direction is at least 0.1 times the width of the groove.

8. A tyre according to any preceding claim, wherein, when viewed in a groove longitudinal direction, the stopping device overlaps the fence by at least 30% of the area of the fence.

9. A tyre according to any preceding claim, wherein the length of the stopping device in the groove longitudinal direction is at least 1.7mm.

10. A tyre according to any preceding claim, wherein the stopping device is adjacent to a wall of the groove, and has an inclined surface to guide the flow of water flowing from the first side away from the wall to which the stopping device is adjacent and onto the fence.

11. A tyre according to claim 10, wherein the inclined surface extends from the longitudinal end of the stopping device which is further from the fence.

12. A tyre according to claim 10 or 11, wherein the inclined surface extends to the longitudinal end of the stopping device which is nearer to the fence.

13. A tyre according to any preceding claim, wherein a plurality of the stopping devices are provided, one of which is adjacent to one wall of the groove, and another of which is adjacent to another wall of the groove, each of which is arranged according to the preceding claim.

14. A tyre according to any preceding claim, the tyre having a designated rotation direction, wherein:
the groove having a fence in it is a circumferential groove; and
the stopping device is arranged to limit the deformation of the fence by a flow of snow flowing along the groove from a second side which is opposite to the first side during braking enough to prevent the snow flowing past the fence.
